# EUROPEAN PATENT SPECIFICATION

(11) **EP 0 831 613 B1**
(45) Date of publication and mention of the grant of the patent: **20.08.2003**
(21) Application number: 96203276.9
(22) Date of filing: 21.11.1996
(51) Int. Cl.: H04L 1/00

(54) **Method and communication network with conversion of a bit stream in transport frames**
Verfahren und Kommunikationsnetz mit Übersetzung eines Bitstroms in Transportrahmen
Procédé et réseau de communication avec conversion d'un flux de bits en trames de transport

(30) Priority: 02.07.1996 NL 1003482
(43) Date of publication of application: 25.03.1998
(73) Proprietor: Koninklijke KPN N.V., 9726 AE Groningen (NL)
(72) Inventor: Byun, Keun-Soo, 2545 ES The Hague (NL)

(56) References cited:
- EP-A- 0 497 452
- EP-A- 0 718 999
- WO-A-95/27385
- WO-A-96/04726
- US-A- 5 230 002
- US-A- 5 268 909

## Description

### A. BACKGROUND OF THE INVENTION

The invention relates to a method for transfer of, in a digital telecommunication network, a bit stream entering the network by way of a first network adapter in which said bit stream is converted into transport frames, each having a frame header and a data part, the bit stream leaving the network again by way of a second network adapter in which the transport frames are converted back into a replica of the bit stream offered to the first network adapter; the first network adapter in each frame header setting one or more check codes relating to at least the data part; which check codes are read by the second network adapter and processed into bit-error codes of a first type; the data part of the transport frame comprising one or more subframes, each having a subframe header and a subdata part, which subframe headers comprise check codes relating to at least the associated subdata part. The invention also relates to a digital telecommunication network in which the method is implemented.

Such a method and digital telecommunication network are generally known. In particular, this includes the transfer of transport frames which are used with an SDH (= Synchronous Digital Hierarchy) or PDH (Plesiochronous Digital Hierarchy) -oriented network. The subframes are formed, e.g., by MPEG2-TS packets. Below, reference will be made, for simplicity's sake, to (PDH) transport frames and (MPEG2-TS) subframes or (MPEG2-TS) packets.

A bit stream arriving at a network is converted, by an input network adapter, into transport frames. In this connection, check codes (bits or bytes) are set: in the event of PDH networks (having 34 Mb/s links) these are, inter alia, the EM (= Error Monitoring) byte, the TR (= Trail Trace) byte and the MA (= Maintenance and Adaptation) byte. The computation of said check codes and their locations in the PDH header are specified in ITU-T Recommendation G.832. After transmission by the network of the transport frame -the header plus the data part- the transport frame may be drawn off from the network by way of an output network adapter. Therein it is computed, on the basis of the check codes, to what extent the network has transferred the frame without (bit) errors. Possible errors are signalled and reported to a network-management member in the form of OAM (= Operation, Administration and Maintenance) parameters.

With the help of the check codes in the frame header, it is possible to check only whether a bit stream offered to the network, accommodated in the data parts of the transport frames, is transferred correctly. It cannot be checked whether the offered bit stream itself contains bit errors. The result thereof is that a bit stream which is offered to a user by way of the network, may contain bit errors for which the network manager is not liable, since it originated earlier in the transmission chain. Said undesirable situation occurs in particular if in the transmission chain between the originator of a bit stream and the end users there are a relatively large number of different transmission mediums. Such may be the case, e.g., in the event of the transfer of MPEG2-TS-coded digital TV signals: the originating signal originates in the studio, is transferred to a satellite transmitter by way of a digital network, relayed to a receiver station by way of the satellite, from there transferred again to TV "head end" by way of another digital network, subsequently to be offered to the end users by way of a CATV network. In the event of the transport of MPEG2-TS-coded digital TV signals by way of a digital telecommunication network, there is generally applied a network adapter, both at the transmitting side and at the receiving side. Such a network adapter provides the conversion of MPEG2-TS packets into transport frames and vice versa.

It will be understood that the cause of errors in the signal transfer may lie in many locations and may result in much displeasure of end users and bickering among operators of satellite connections, PDH and CATV networks.

### B. SUMMARY OF THE INVENTION

The object of the invention is to terminate said undesirable situation by having the network adapter not only look at bit errors in the output bit stream as compared to the input bit stream, but by also investigating the contents of the subframe heads. This object is achieved by a method according to Claim 1 and a network according to Claim 6. This may be done both in the input adapter and in the output adapter. Error detection of the input bit stream is possible only if said data has a structure which is recognisable by the network adapter. If said data part is filled, as in the event of the transport of MPEG2-TS packets, with subframes (or packets) which themselves also consist of a subframe header and a subdata part, the value of check codes of the subframe headers may be read and processed. As it were, detection of possible errors in the bit stream ―consisting of subframes (MPEG2-TS packets)― is not left to the agency to which the bit stream ―by way of the network- is offered, but error detection of the bit stream is already carried out by the network, by the network adapters. As a result, errors in the bitstream (MPEG2-TS packets) may be signalled both in the entering and the exiting bit stream, and reported to the agency responsible for said bit stream offered to the network.

### C. EXEMPLARY EMBODIMENTS

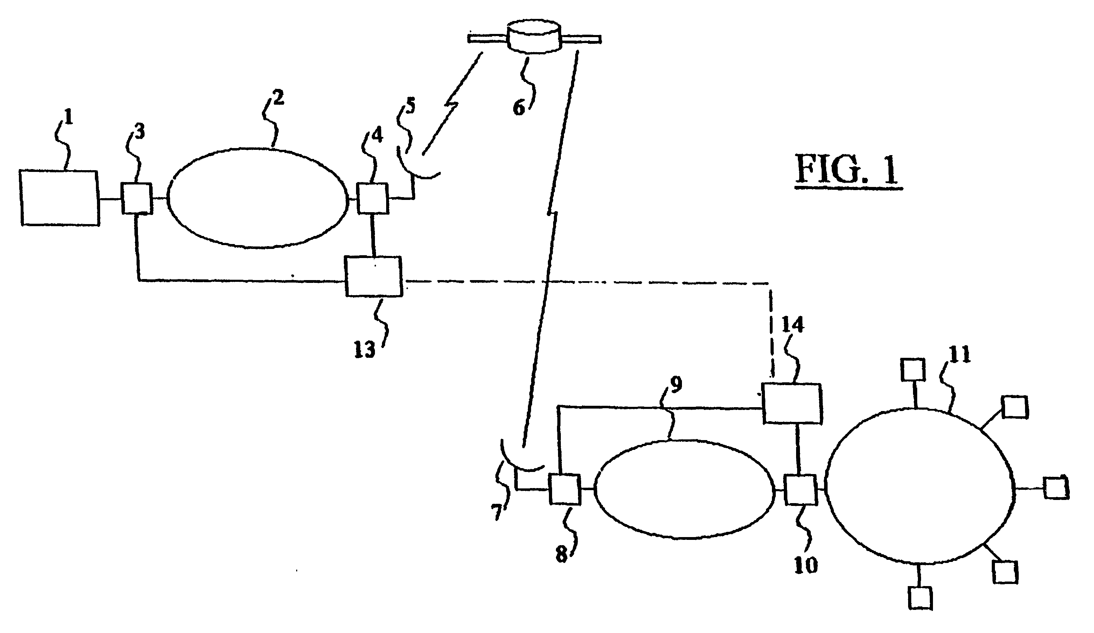

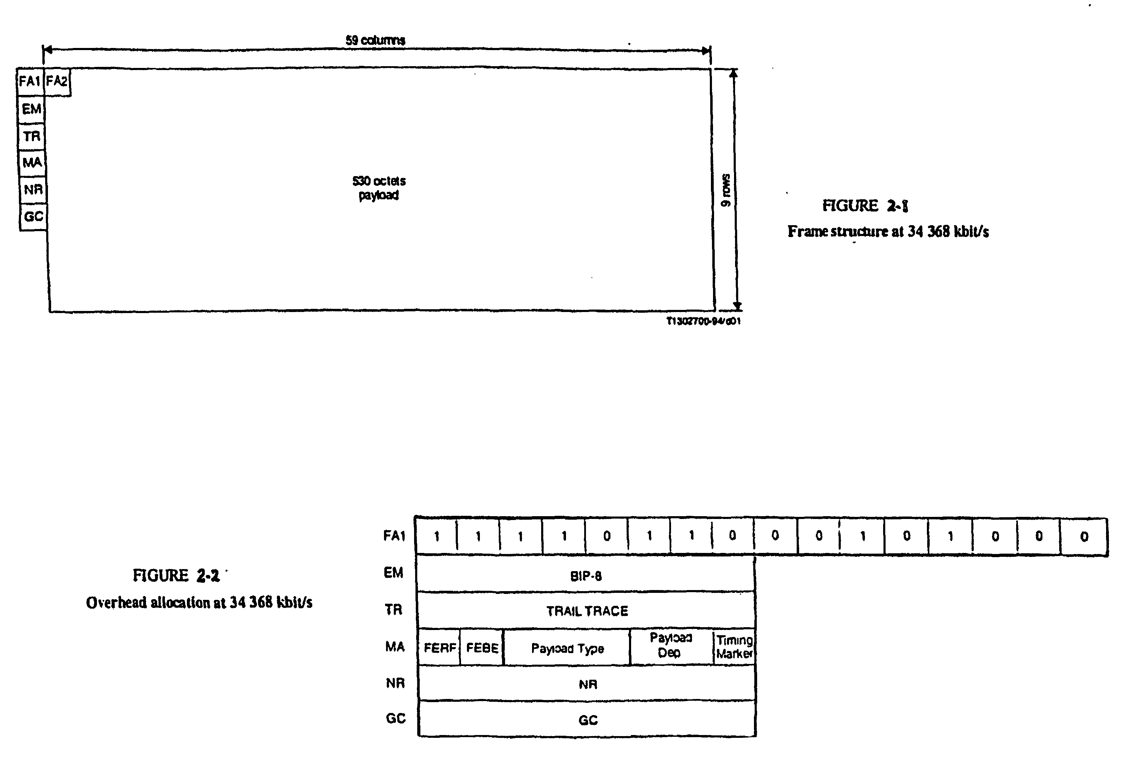

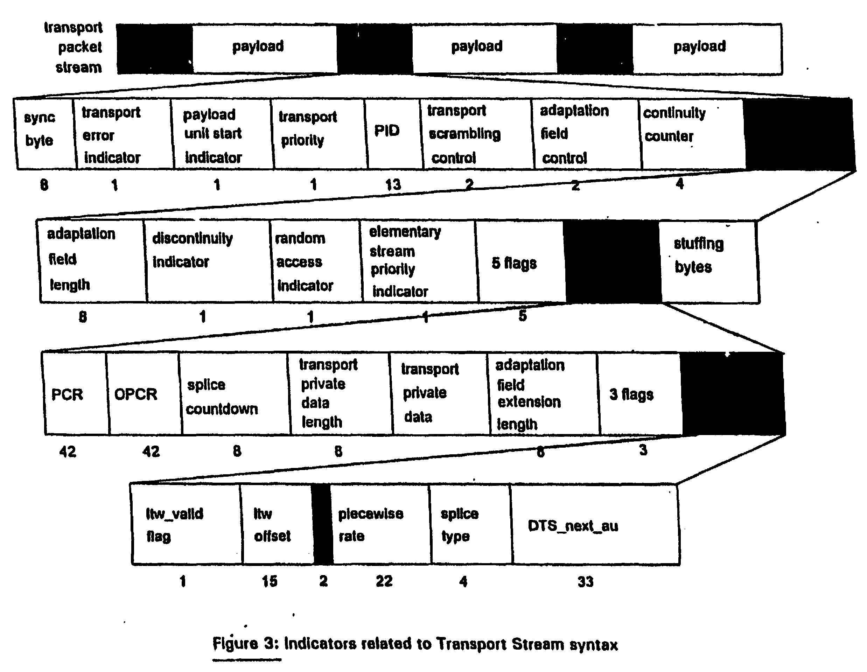

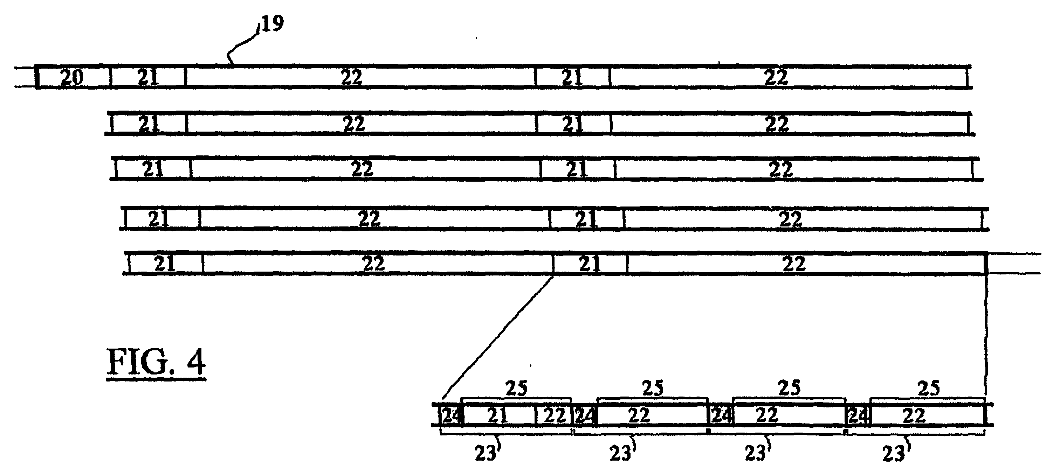

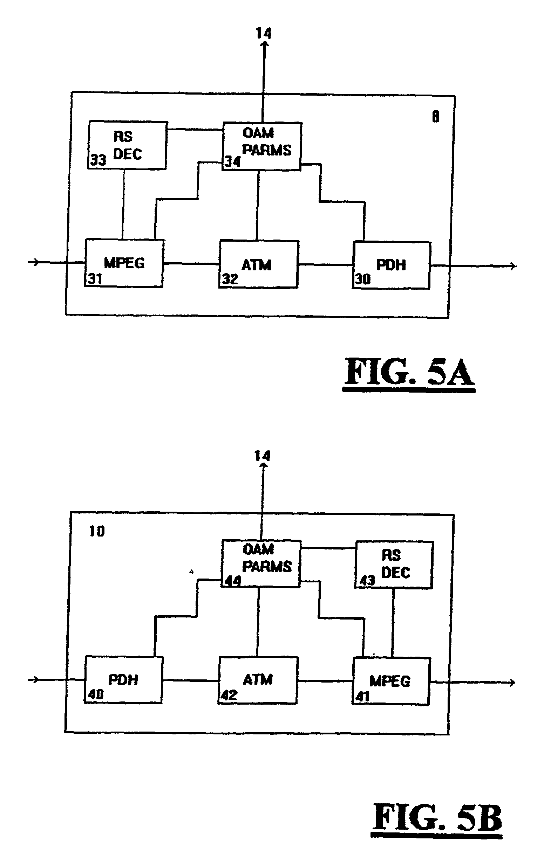

FIG. 1 schematically shows a connection between a TV studio and a TV subscriber by way of various transmission mediums. FIG. 2 shows a structure of a transport frame, while FIG. 3 shows the structure of an MPEG2-TS packet. FIG. 4 schematically shows a PDH transport frame having therein various MPEG2-TS packets, each distributed among four ATM cells. FIG. 5A and FIG. 5B schematically show the construction of a network input and output adapter, respectively.

FIG. 1 shows a TV studio 1, in which there is produced a TV signal in MPEG2-TS format. The bit stream produced consists of MPEG2-TS packets (distributed among four ATM cells) which are offered to a first network 2 by way of a network adapter 3. The signal is transferred, by way of the network 2 and a network adapter 4, to a satellite connection consisting of a ground station 5, a communication satellite 6 and a ground station 7. The signal received in the ground station 7 is offered to a network adapter 8, transferred by a network 9 and offered to a CATV network 11 by way of a network adapter 10, whereafter it finally reaches subscribers 12. The network adapters are still connected to network-management members 13 and 14, where the values of OAM (= Operation, Administration and Maintenance) parameters, i.e., the processing results of the detected check codes, are monitored and, on the basis thereof, there may be taken measures.

It will be understood that, given the quantity of transmission mediums, the chance of bit errors is clearly present and that in doing so there may easily arise ambiguities on cause, responsibility and liability. The farther into the transmission chain, the greater the chance of bit errors. Thus it may be important, certainly for the network operator who is responsible for network 9, to monitor the quality of the bit stream supplied to the CATV network as well as possible, and to signal errors therein at an early stage. The cause of transmission errors occurring in network 9 must be traced and remedied by the operator himself; bit errors which are already present in the bit stream offered to network 9 cannot be prevented by the operator of network 9, but should be signalled to the signal supplier -in this case the manager of the satellite link 5...7- and the customer of the signal, in this case the manager of the CATV network.

According to the invention, it is not only ensured that transfer errors caused by the network 9 are signalled, but the bit stream itself is also monitored, both the input bit stream, by the network adapter 8, and the output bit stream, by network adapter 10. This may be at the level of the MPEG2-TS packets and even at the level of the ATM cells, in which said MPEG2-TS packets are accommodated; after all, the location and significance of the check codes is known for both. The OAM parameters transferred to the network-management member 14 are therefore, according to the invention, not only the result of detection and processing of the check codes which are part of the transport frames, but also the result of detection and possible processing of the MPEG2-TS check codes which relate to the MPEG2-TS packets, while the check codes of the ATM cells--still smaller transmission structures-- may also be included therein.

FIG. 2 shows the transport-frame structure for a 34386 kbit/s bit stream for PDH networks, copied from the ITU-T Recommendation G.832 of November 1993. The check codes referred to in the preceding paragraph, e.g., the EM byte, the TR byte and the MA byte, may be retrieved therefrom. In the "payload" of the frame, there is room for various ("encapsulated") MPEG2-TS packets, of which the structure is shown in FIG. 3. Since the locations within the MPEG2-TS packet are fixed, the values of the check codes may be read and added to the OAM parameters. The key check codes are (see FIG. 3): the "transport error indicator", the "sync byte" and the 4-bit "continuity counter". In addition, if the MPEG2-TS signal has been coded at the source by a Reed-Solomon coder, it is possible for a Reed-Solomon decoder in the network adapter to attempt correcting bit errors in the payload of the MPEG2-TS packet and wherever such does not succeed, to add an EB (= Errored Block) code to the OAM parameters.

FIG. 4 shows a bit stream, i.e., one transport frame 19 therefrom. The frame comprises a header 20 and a data part ("payload"), which is filled with a number of MPEG2-TS packets. Said MPEG2-TS packets each have a header 21 and a data part 22. The structure of the transport frames is shown in more detail in FIG. 2; that of the MPEG2-TS packets in FIG. 3. FIG. 4 still shows --as a practical implementation example-- that the MPEG2-TS packets are each distributed among four ATM cells 23, which again each comprise a header 24 and a data part 25. Each MPEG2-TS packet, the header plus the payload part, is therefore distributed among, and encapsulated in, four ATM cells.

As explained above, there is read and processed, by the network adapter 10 at the output of the network 9, the value of the check codes from the transport-frame headers 20, as well as the check codes of the MPEG2-TS packets 21. Just as the check codes from the PDH headers 22 and the MPEG2-TS headers 21, it is also possible in the same manner to detect and interpret the check codes from the ATM headers.

FIG. 5A and FIG. 5B schematically show the network adapters 8 and 10. Therein, the check codes of both the PDH headers, the MPEG2-TS headers and the ATM headers are detected and converted into OAM parameters. Although it is possible to have the reading-in of the various types of check code carried out by one integrated member without much effort, FIG. 5 shows three different members, 30...32, for reading the check codes of the MPEG headers (21), the ATM headers (24) and the PDH headers (20), respectively. The values of the check codes are processed, in a member 34, into OAM parameters which are transferred to the network-management member (14). Depending on the type of check code, it is either used raw as OAM parameter, or after processing. Thus, checksum codes are first used to compute whether bit errors have originated in the bit series to which said checksum relates. To be capable of computing this, not only are the check codes read, but also the entire bit series to which said checksum code relates. As a function of the outcome of said checksum computation, there is determined the AOM parameter relating thereto. The member 31 also reads the RS pariteitsbits of the RS-coded MPEG2-TS packets in order to be capable of having them decoded by a Reed-Solomon decoder 33. If it turns out that there are non-correctable errors in the payload, this, too, is transmitted as OAM parameter to the management member 14.

There are therefore continuously transmitted OAM parameters to the network-management member 14, which are the result of monitoring both the transport frames, the MPEG2-TS packets, and the ATM cells. In the management member 14, said OAM parameters are processed in such a manner that it is always apparent in which domain, the PDH domain, the MPEG2-TS domain or the ATM domain, there are occurring errors. Depending on the seriousness thereof, the supplier of the bit stream --the MPEG2-TS packets-- may be warned, or there may be taken measures within the domain of the network. In the output network adapter 10, shown in FIG. 5B, there occurs the same as in the input network adapter 8 shown in FIG. 5A. In the members, 40...42, there are read the check codes of the PDH headers (20), the ATM headers (24) and the MPEG headers (21), respectively. The values of the check codes are processed, in a member 44, into OAM parameters which are transferred to the network-management member (14). The member 41 also reads the RS parity bytes of the RS-coded MPEG2-TS packets in order to be capable of having them decoded by a Reed-Solomon decoder 43. If it turns out that there are non-correctable errors in the payload, such is also transmitted as OAM parameter to the management member 14.

There are therefore continuously transmitted OAM parameters, both from the input network adapter 8 and from the output adapter 10, to the network-management member 14 which, on either side of the network 9, are the result of monitoring the transport frames, the MPEG2-TS packets and the ATM cells.

It should be noted that network 2 and network 9 are basically equal to one another; just as network adapters 3 and 8, and 4 and 10, respectively. The network adapters 3 and 4 are therefore capable, just as in the network adapters 8 and 10 to the network-management member 14, of transmitting OAM parameters to the network-management member 13. The members 13 and 14 may be connected to one another for exchanging OAM information.

### D. REFERENCES

[1] ITU-T Recommendation G.832 (November 1993)
[2] Draft DVB Measurement Guidelines for DVB Systems, DVB TM 1601.

## Claims

1. Method for transfer of, in a digital telecommunication network (2, 9), a bit stream entering the network by way of a first network adapter (3, 8) in which said bit stream is converted into transport frames, each having a frame header and a data part, the bit stream leaving the network again by way of a second network adapter (4, 10) in which the transport frames are converted back again into a replica of the bit stream offered to the first network adapter; the first network adapter in each frame header setting one or more check codes relating to at least the data part, which check codes are read by the second network adapter and processed into bit-error codes of a first type; the data part of the transport frame comprising one or more subframes, each having a subframe header and a subdata part, which subframe headers comprise check codes relating to at least the associated subdata part, **characterised in that** the first network adapter (3, 8) and/or the second network adapter (4, 10) also reads the check codes from the subframe headers and processes them into bit-error codes of a second type.

2. Method according to claim 1, **characterised in that** the transport frames are PDH transport frames.

3. Method according to claim 1, **characterised in that** the transport frames are SDH transport frames.

4. Method according to claim 1, wherein the subframes are formed by MPEG2-TS data packets.

5. Method according to claim 1, wherein the subframes are formed by ATM data cells.

6. A digital telecommunication network (2, 9) comprising a first network adapter (3, 8) fit for converting a bit stream entering the network into transport frames, each having a frame header and a data part, the network, moreover, comprising a second network adapter (4, 10) fit for converting back the transport frames into a replica of the bit stream offered to the first network adapter; the first network adapter comprising means for setting, in each frame header one or more check codes relating to at least the data part, the second network adapter comprising means for reading the check codes and processing them into bit-error codes of a first type, **characterised in that** the first network adapter (3,8) and/or the second network adapter (4, 10) comprises means for reading check codes relating to subdata parts of subframes, each having a subframe header and a subdata part, comprised by the data part of the transport frame, and processing those check codes relating to the subdata parts into bit-error codes of a second type.

7. A digital telecommunication network according to claim 6, **characterised in that** the transport frames are PDH transport frames.

8. A digital telecommunication network according to claim 6, **characterised in that** the transport frames are SDH transport frames.

9. A digital telecommunication network according to claim 6, wherein the subframes are formed by MPEG2-TS data packets.

10. A digital telecommunication network according to claim 6, wherein the subframes are formed by ATM data cells.

## Patentansprüche

1. Verfahren zur Übertragung in einem digitalen Telekommunikationsnetzwerk (2, 9) von einem Bit-Strom, der in ein Netzwerk über einen ersten Netzwerkadapter (3, 8) eintritt, in dem der besagte Bit-Strom in Transportrahmen gewandelt wird, wobei jeder einen Rahmenkopf und einen Datenteil umfasst, wobei der Bit-Strom das Netzwerk wieder über einen zweiten Netzwerkadapter (4, 10) verlässt, bei dem die Transportrahmen zurück in eine Replik des Bit-Stroms gewandelt werden, der dem ersten Netzwerkadapter angeboten wurde; wobei der erste Netzwerkadapter in jedem Rahmenkopf einen oder mehrere Überprüfungscodes setzt, die sich mindestens auf den Datenteil beziehen, welche Überprüfungscodes von dem zweiten Netzwerkadapter gelesen und in Bit-Fehlercodes eines ersten Typs verarbeitet werden; wobei der Datenteil des Transportrahmens einen oder mehrere Unterrahmen umfasst, wobei jeder einen Unterrahmenkopf und Unterdatenteil umfasst, welcher Unterrahmenkopf Überprüfungscodes aufweist, die sich mindestens zum Teil auf den zugeordneten Unterdatenteil beziehen, **dadurch gekennzeichnet, dass** der erste Netzwerkadapter (3, 8) und/oder der zweite Netzwerkadapter (4, 10) auch die Überprüfungscodes aus den Unterrahmenköpfen ausliest und sie in Bit-Fehlercodes eines zweiten Typs verarbeitet.

2. Verfahren nach Anspruch 1, **dadurch gekennzeichnet, dass** die Transportrahmen PDH-Transportrahmen sind.

3. Verfahren nach Anspruch 1, **dadurch gekennzeichnet, dass** die Transportrahmen SDH-Transportrahmen sind.

4. Verfahren nach Anspruch 1, bei dem die Unterrahmen aus MPEG2-TS Datenpaketen bestehen.

5. Verfahren nach Anspruch 1, bei dem die Unterrahmen aus ATM-Datenzellen bestehen.

6. Digitales Kommunikationsnetzwerk (2, 9) mit einem ersten Netzwerkadapter (3, 8), der geeignet ist, um einen Bit-Strom, der in ein Netzwerk eintritt, in Transportrahmen zu wandeln, wobei jeder einen Rahmenkopf und einen Datenteil umfasst, wobei das Netzwerk weiterhin einen zweiten Netzwerkadapter (4, 10) aufweist, der geeignet ist, die Transportrahmen zurück in eine Replik des Bit-Stroms zurückzuverwandeln, der dem ersten Netzwerkadapter angeboten wurde; wobei der erste Netzwerkadapter Mittel umfasst, um in jedem Rahmenkopf einen oder mehrere Überprüfungscodes zu setzen, die sich mindestens auf den Datenteil beziehen, wobei der zweite Netzwerkadapter Mittel umfasst, um die Überprüfungscodes zu lesen und in Bit-Fehlercodes eines ersten Typs zu verarbeiten; **dadurch gekennzeichnet, dass** der erste Netzwerkadapter (3, 8) und/oder der zweite Netzwerkadapter (4, 10) Mittel umfasst, um Überprüfungscodes auszulesen, die sich auf Unterdatenteile der Unterrahmen beziehen; wobei jeder einen Unterrahmenkopf und ein Unterdatenteil umfasst, die von den Datenteilen des Transportrahmens umfasst sind, und um diese Überprüfungscodes, die sich auf Unterdatenteile beziehen, in Bit-Fehlercodes eines zweiten Typs zu verarbeiten.

7. Digitales Kommunikationsnetzwerk nach Anspruch 6, **dadurch gekennzeichnet, dass** die Transportrahmen PDH-Transportrahmen sind.

8. Digitales Kommunikationsnetzwerk nach Anspruch 6, **dadurch gekennzeichnet, dass** die Transportrahmen SDH-Transportrahmen sind.

9. Digitales Kommunikationsnetzwerk nach Anspruch 6, bei dem die Unterrahmen aus MPEG2-TS Datenpaketen bestehen.

10. Digitales Kommunikationsnetzwerk nach Anspruch 6, bei dem die Unterrahmen aus ATM-Datenzellen bestehen.

## Revendications

1. Procédé pour transférer, dans un réseau de télécommunication numérique (2, 9), un flux de bits pénétrant dans le réseau par l'intermédiaire d'un premier adaptateur (3, 8) du réseau, dans lequel ledit flux de bits est converti en des trames de transport, dont chacune possède un en-tête de trame et une partie de données, le flux de bits quittant le réseau à nouveau par l'intermédiaire d'un second adaptateur (4, 10) du réseau, dans lequel les trames de transport sont converties en retour en une réplique du flux de bits envoyé au premier adaptateur du réseau, le premier adaptateur du réseau réglant, dans chaque en-tête de trame, un ou plusieurs codes de contrôle associés à au moins la partie de données, lesquels codes de contrôle sont lus par le second adaptateur du réseau et sont traités pour former des codes d'erreurs sur les bits d'un premier type; la partie de données de la trame de transport comprenant une ou plusieurs trames secondaires, dont chacune possède un en-tête de trame secondaire et une partie de données secondaires, lesquels en-têtes de trames secondaires comprenant des codes de contrôle concernant au moins la partie associée de données secondaires, **caractérisé en ce que** le premier adaptateur (3,8) du réseau et/ou le second adaptateur (4, 10) du réseau lit également les codes de contrôle à partir des en-têtes de trames secondaires et les traite pour former des codes d'erreurs sur les bits d'un second type.

2. Procédé selon la revendication 1, **caractérisé en ce que** les trames de transport sont des trames de transport PDH.

3. Procédé selon la revendication 1, **caractérisé en ce que** les trames de transport sont des trames de transport SDH.

4. Procédé selon la revendication 1, selon lequel les trames secondaires sont formées par des paquets de données MPEG2-TS.

5. Procédé selon la revendication 1, selon lequel les trames de transport sont formées par des cellules de données ATM.

6. Réseau de télécommunication numérique (2, 9) comprenant un premier adaptateur de réseau (3, 8), monté pour convertir un flux de bit pénétrant dans le réseau en des trames de transport, dont chacune possède un en-tête de trame et une sortie de données, le réseau comportant en outre un second adaptateur de réseau (4, 10) monté de manière à convertir en retour les trames de transport sous la forme d'une réplique du flux de bits envoyé au premier adaptateur du réseau; le premier adaptateur du réseau comprenant des moyens pour régler, dans chaque en-tête de trame, un ou plusieurs codes de contrôle concernant au moins la partie de données, le second adaptateur du réseau comprenant des moyens pour lire les codes de contrôle et les traiter pour former des codes d'erreurs sur les bits d'un premier type, **caractérisé en ce que** le premier adaptateur (3, 8) du réseau et/ou le second adaptateur (4, 10) du réseau comprennent des moyens pour lire des codes de contrôle concernant des parties de données secondaires de trames secondaires, dont chacune possède un en-tête de trame secondaire et une partie de données secondaires, constituée par la partie de données de la trame de transport, et traiter ces codes de contrôle concernant les parties de données secondaires en des codes d'erreurs sur les bits d'un second type.

7. Réseau de télécommunication numérique selon la revendication 6, **caractérisé en ce que** les trames de transport sont des trames de transport PDH.

8. Réseau de télécommunication numérique selon la revendication 6, **caractérisé en ce que** les trames de transport sont des trames de transport SDH.

9. Réseau de télécommunication numérique selon la revendication 6, dans lequel les trames de transport sont formées par des paquets de données MPEG2-TS.

10. Réseau de télécommunication numérique selon la revendication 6, dans lequel les trames de transport sont formés par des cellules de données ATM.
